# EUROPÄISCHE PATENTSCHRIFT

(11) **EP 3 378 015 B1**
(45) Veröffentlichungstag und Bekanntmachung des Hinweises auf die Patenterteilung: **21.09.2022**
(21) Anmeldenummer: 16798450.9
(22) Anmeldetag: 15.11.2016
(51) Int. Cl.: G06K 19/077, B23G 5/00, B23C 1/00, G05B 19/12

(54) **WERKZEUG MIT RFID-CHIP UND VERFAHREN ZUM BEFESTIGEN EINES RFID-TAGS AN EINEM WERKZEUG**
TOOL WITH RFID-TAG AND METHOD FOR FIXING AN RFID-TAG TO A TOOL
OUTIL COMPORTANT UN DISPOSITIF RFID ET PROCÉDÉ POUR LA FIXATION D'UN DISPOSITIF RFID DANS UN OUTIL

(30) Priorität: 20.11.2015 DE 102015120153
(43) Veröffentlichungstag der Anmeldung: 26.09.2018
(73) Patentinhaber: Bilz Werkzeugfabrik GmbH & Co. KG, 73760 Ostfildern (DE)
(72) Erfinder: FRONIUS, Juergen, 74399 Walheim (DE)
(74) Vertreter: Witte, Weller & Partner Patentanwälte mbB
(86) Internationale Anmeldenummer: PCT/EP2016/077664
(87) Internationale Veröffentlichungsnummer: WO 2017/085041

(56) Entgegenhaltungen:
- EP-A2- 2 680 200
- DE-U1-202011 050 941
- DE-U1-212010 000 083
- US-A- 4 742 470
- US-A1- 2003 156 033
- US-A1- 2009 175 694
- US-A1- 2009 283 595
- US-A1- 2011 266 353
- US-A1- 2012 168 519
- US-A1- 2012 187 197
- US-B1- 6 427 504

## Beschreibung

Die Erfindung betrifft ein Werkzeug, insbesondere zur spanenden Bearbeitung von metallischen Werkstücken, mit einer Patrone, in der ein RFID-Chip gekapselt aufgenommen ist, die in einer Blindbohrung des Werkzeugs gehalten ist.

Im Zuge der zunehmenden Automatisierung sowohl in der Fertigung als auch in der Logistik sind seit geraumer Zeit automatisch lesbare Systeme im Einsatz. Diese umfassen neben optisch lesbaren Mustern, wie etwa Barcodes, unter anderem auch RFID-Systeme (Radio Frequency Identification), die auf den Produkten oder Halbfabrikaten, denen die Erkennungsmaßnahmen gelten, aufgebracht sind. RFID-Systeme bestehen aus einem RFID-Chip und einer Antenne. Die Antenne dient der Einkopplung von elektromagnetischen Wellen einer definierten Trägerfrequenz, welche die Halbleiterschaltkreise in die Lage versetzen, Speicher auszulesen und die darin befindlichen Informationen über das Nahfeld an den Trägersignalsender zurückzusenden, der dadurch auch Empfänger ist. Der Vorteil dieser Systeme ist, dass sie keine Energiequelle benötigen, sehr klein sind und, bei entsprechender Umhausung, die gespeicherte Information dauerhaft und relativ störungsresistent bewahren. Die Information geht erst verloren, wenn der Halbleiter-Miniatur-Schaltkreis mechanisch zerstört wird oder extrem starke Störfelder elektromagnetisch den Speicher zerstören.

Eine wesentliche Rolle für die mechanische Dauerhaftigkeit spielt hierbei die Umhüllung des RFID-Chips, auch TAG genannt, sowie die Verbindung zu dem Trägerkörper. Ist der Trägerkörper metallisch, wie dies bei Werkzeugen zur spanenden Bearbeitung von metallischen Werkstücken regelmäßig der Fall ist, so wird das elektromagnetische Feld durch das elektrisch leitende Werkzeug gestört. Zur Verbindung eines RFID-Chips mit einem Werkzeug muss daher zwingend ein nichtmetallischer Werkstoff, wie etwa ein Kunststoff oder eine Keramik, verwendet werden.

Gemäß DIN 69873 sind schnittstellenabhängig eine Bohrung und ein Ort vorgesehen, an dem der RFID-Chip in einer ebenfalls durch Norm bestimmten Umhausung vorverpackt festgelegt wird. Die gemäß dem Stand der Technik vorgesehene Verbindung besteht im Verkleben der mit dem RFID-Chip fest verbundenen Umhausung mit dem Werkzeugkörper. Neben dem recht anspruchsvollen Klebeprozess, der recht viele Fehlerquellen einführt (Entfetten, Fügespalt, Klebermenge usw.), stellt diese Verbindungstechnik auch hohe Ansprüche an die Oberflächenpräparation der betreffenden Blindbohrung. Im Folgenden wird die aus RFID-Chip einschließlich Antenne und der damit fest verbundenen Umhausung bestehende Einheit auch als Patrone bezeichnet.

Gemäß der CN204371113 U ist zur Befestigung einer Patrone, in der ein RFID-Chip gekapselt aufgenommen ist, eine Blindbohrung an einem Werkzeugkörper vorgesehen, in der die Patrone in Form eines Zylinders mittels einer geraden Rändelung fixiert ist.

Aus der US 2011/0266353 A1 ist es ferner bei einer Rohrleitung, welche als Werkzeug bei der Herstellung von Bohrungen für die Gas- und Ölgewinning bei Erd- oder Unterwasseranwendungen verwendet wird, bekannt, in einer Außenbohrung des Rohrs eine Patrone mit einem RFID-Chip durch eine Verschraubung festzulegen. Zur Abdichtung nach außen is vorzugsweise zusätzlich eine Klebeverbindung oder ein Epoxidharz vorgesehen.

Aus der DE 20 2011 050 941 U1 ist es ferner bekannt, einen RFID-Chip zusammen mit einer Antenne in einem Kunststoffgehäuse als Patrone gekapselt aufzunehmen und das Gehäuse an einem chirurgischen Instrument mittels einer umlaufenden Laserschweißnaht dichtend festzulegen.

Aus der DE 21 2010 000 083 U1 ist es ferner bekannt, einen RFID-Chip in einem Gehäuse zusammen mit der Antenne in einer Patrone zu verkapseln. Die Patrone kann in einer Blindbohrung eines Objektes reibschlüssig festgelegt werden.

Aus der US 4 742 470 A ist ein Werkzeug zur spanenden Bearbeitung von metallischen Werkstücken bekannt, bei dem in einer Ausnehmung des Werkstücks ein Elektronikmodul mit einem Transponder mit einem Speicher und einem darin gespeicherten Identifikationscode aufgenommen ist.

Vor diesem Hintergrund liegt der Erfindung die Aufgabe zugrunde, ein Werkzeug zu schaffen, bei dem eine Patrone mit einem gekapselten RFID-Chip auf möglichst einfache und zuverlässige Weise in einer Blindbohrung des Werkzeugs befestigt ist.

Diese Aufgabe wird durch den Gegenstand nach Anspruch 1 gelöst. Die abhängigen Ansprüche definieren bevorzugte Ausführungsbeispiele.

Die Aufgabe der Erfindung wird auf diese Weise vollkommen gelöst.

Während bislang die Patrone in der Blindbohrung verklebt wurde oder mittels einer Rändelung gehalten wurde, erlaubt nunmehr die Verwendung eines Gehäuses, das vorzugsweise aus Kunststoff bestehen kann, eine verbesserte Befestigung, da es nicht mehr auf einen anspruchsvollen Klebeprozess ankommt, bei dem Fehlerquellen auftreten können, etwa bei der Entfettung, bei einem Fügespalt, bei der Einhaltung der Klebermenge usw. Vielmehr wird durch das zusätzliche die Patrone umschließende Gehäuse eine Entkopplung gewährleistet. Das Gehäuse kann zur Klemmbefestigung oder zur formschlüssigen Befestigung genutzt werden und bietet einen zusätzlichen Schutz gegen eine Beschädigung der empfindlichen Patrone.

Mittels des Spreizabschnittes, der eine elastische Verformung des Gehäuses zur unmittelbaren Fixierung des Gehäuses mittels Einpressen in die Blindbohrung oder mittels eines zusätzlichen Elements erlaubt, wird hierbei erfindungsgemäß eine besonders einfache und zuverlässige Befestigung in der Blindbohrung gewährleistet.

Gemäß einer weiteren Ausgestaltung der Erfindung ist das Gehäuse topfförmig ausgebildet, mit einem Aufnahmeabschnitt zur Aufnahme der Patrone im Bereich eines Bodens, an den sich ein Spreizabschnitt anschließt.

Mit einer derartigen Ausgestaltung des Gehäuses ergibt sich eine gute Integrationsmöglichkeit für die Patrone. Der Spreizabschnitt erlaubt dann, wenn die Patrone aus Kunststoff besteht, eine elastische Verformung des Gehäuses, so dass das Gehäuse zusammen mit der Patrone entweder unmittelbar in die Blindbohrung eingepresst werden kann oder mittels eines zusätzlichen Elements befestigt werden kann.

In weiterer Ausgestaltung der Erfindung ist der Spreizabschnitt in Umfangsrichtung in eine Mehrzahl von Segmenten unterteilt.

Hierdurch wird eine elastische Verformung des Spreizabschnittes erleichtert.

Gemäß einer weiteren Ausgestaltung der Erfindung weist das Gehäuse eine umlaufende Außennut auf.

Die Außennut erleichtert eine Befestigung unmittelbar in der Blindbohrung oder aber in Verbindung mit einem weiteren Element.

Gemäß einer weiteren Ausgestaltung der Erfindung ist der Spreizabschnitt an seinem äußeren Ende konisch zulaufend ausgebildet.

Dies erlaubt ein erleichtertes Einführen des Spreizabschnittes in die Blindbohrung oder in ein anderes Element, insbesondere unter Anwendung von Druck.

Gemäß einer weiteren Ausgestaltung der Erfindung ist das Gehäuse mit der Patrone als Kunststoffspritzgussteil vergossen.

Dies gewährleistet eine dauerhafte Verbindung der Patrone mit dem Gehäuse und erlaubt eine Herstellung in großen Stückzahlen.

Gemäß einer Variante der Erfindung ist die Patrone mit dem Gehäuse mittels einer Vergussmasse stoffschlüssig verbunden.

Dies ermöglicht eine kostengünstige Herstellung des Gehäuses mit spanender Bearbeitung durch Fräsen oder Drehen und eine anschließende sichere Verbindung mit dem Gehäuse. Auf diese Weise kann die Herstellung von Kunststoffspritzgussformen vermieden werden, was zwar zu einer sehr innigen, dauerhaften Verbindung führt, jedoch bei relativ geringen Stückzahlen aufgrund der teuren Formenherstellung unwirtschaftlich wäre.

Gemäß einer weiteren Ausgestaltung der Erfindung ist das Gehäuse zusammen mit einem O-Ring in der Blindbohrung unter Vorspannung gehalten.

Auf diese Weise ergibt sich eine dauerhafte und sichere Befestigung des Gehäuses mit der Patrone in der Blindbohrung.

Gemäß einer weiteren Ausgestaltung der Erfindung ist das Gehäuse in die Blindbohrung des Werkzeugs eingepresst.

Hierdurch ergibt sich eine sichere und dauerhafte Festlegung des Gehäuses in der Blindbohrung, ohne dass hierzu ein Kleber erforderlich ist.

Gleichwohl ist es natürlich denkbar, das Gehäuse in der Blindbohrung des Werkzeugs (zusätzlich) durch einen Klebstoff zu fixieren.

Gemäß einer weiteren Ausgestaltung der Erfindung ist das Gehäuse an einem Hinterschnitt der Blindbohrung gehalten.

Auf diese Weise kann durch einen solchermaßen erfolgten Formschluss zwischen dem Gehäuse und der Blindbohrung eine besonders sichere Festlegung der Patrone in der Blindbohrung gewährleistet werden.

Gemäß einer weiteren Ausgestaltung der Erfindung ist das Gehäuse in einem Kunststoffring gehalten, der in die Blindbohrung des Werkzeugs eingepresst ist.

Durch die zusätzliche Verwendung eines solchen Kunststoffrings wird die Variationsmöglichkeit für die Befestigung der Patrone in der Blindbohrung vergrößert. Weiterhein ist es möglich, auf diese Weise eine Befestigung nach dem Dübelprinzip zu erreichen.

Hierzu weist der Kunststoffring vorzugsweise einen umlaufenden Innenwulst auf, in dem das Gehäuse mit einer umlaufenden Außennut formschlüssig gehalten ist. Somit kann das Gehäuse mit der Patrone in den Kunststoffring eingepresst werden und wird dann mit seiner umlaufenden Außennut formschlüssig am Innenwulst des Kunststoffrings gehalten. Hierdurch erfährt der Kunststoffring weiterhin eine gewisse Aufweitung in seinem Außendurchmesser, wodurch eine Presspassung in der Blindbohrung des Werkzeugs gewährleistet werden kann.

Gemäß einer weiteren Ausgestaltung der Erfindung weist der Kunststoffring gegenüber der Blindbohrung ein solches Übermaß auf, dass der Kunststoffring nach dem Einpressen in die Blindbohrung im dauerelastischen Bereich verformt ist.

Auf diese Weise wird gewährleistet, dass der Kunststoffring mit dem darin aufgenommenen Gehäuse und der Patrone dauerhaft elastisch innerhalb der Blindbohrung des Werkzeugs gehalten ist. So wird vermieden, dass sich eine plastische Verformung ergibt, was bei Auftreten von größeren Temperaturschwankungen ggf. zu einem Lösen des Kunststoffrings aus der Blindbohrung führen könnte.

Weiterhin wird mit der Erfindung ein Fügewerkzeug zum Einbau des Kunststoffrings mit dem Gehäuse und der darin aufgenommenen Patrone in eine Blindbohrung des Werkzeugs bereitgestellt, mit einem Rohr, dessen Rand zur Anlage an dem Kunststoffring ausgebildet ist, und in dem ein Schlagbolzen beweglich ist, an dem ein hohles Ende zur Aufnahme des Gehäuses vorgesehen ist.

Auf diese Weise wird der Einbau des Gehäuses mit der empfindlichen Patrone in die Blindbohrung des Werkzeugs erleichtert und einer Beschädigung der Patrone entgegengewirkt.

Hierbei kann die Patrone mit dem Gehäuse durch Spritzgießen verbunden werden oder alternativ kann die Patrone in einen Aufnahmeabschnitt des Gehäuses eingesetzt werden und anschließend mittels einer Vergussmasse stoffschlüssig mit dem Gehäuse verbunden werden. Bei der Vergussmasse kann es sich beispielsweise um ein Epoxidharz handeln.

Gemäß einer weiteren Ausgestaltung des erfindungsgemäßen Verfahrens wird das Gehäuse in der Blindbohrung verklebt.

Hierdurch wird eine zusätzliche Sicherung des Gehäuses in der Blindbohrung erreicht.

Gemäß einem weiteren Merkmal der Erfindung wird das Gehäuse mittels eines O-Rings, welcher in eine äußere Umfangsnut des Gehäuses eingreift, in der Blindbohrung fixiert.

Auf diese Weise kann eine einfache und sichere elastische Befestigung unmittelbar in der Blindbohrung gewährleistet werden.

Gemäß einer weiteren Variante der Erfindung wird das Gehäuse an einem Hinterschnitt der Blindbohrung fixiert.

Auf diese Weise kann durch einen Formschluss zwischen Gehäuse und Blindbohrung eine besonders sichere Fixierung gewährleistet werden.

Gemäß einer weiteren Variante der Erfindung wird die Aufgabe durch ein Verfahren zur Befestigung einer Patrone, in der ein RFID-Chip aufgenommen ist, in einer Blindbohrung eines Werkzeugs mit den folgenden Schritten gelöst:
- Bereitstellen eines Gehäuses zur Aufnahme der Patrone;
- Stoffschlüssiges Verbinden der Patrone mit dem Gehäuse;
- Ausbilden eines Spreizabschnittes an einem Ende des Gehäuses;
- Bereitstellen eines Kunststoffrings, in den das Gehäuse mit der Patrone einpressbar ist;
- Herstellen einer Blindbohrung am Werkzeug;
- Ansetzen des Kunststoffrings und des Gehäuses mit der Patrone an der Blindbohrung und
- Einpressen in die Blindbohrung.

Mit einem derartigen Verfahren wird eine sichere Befestigung des Gehäuses mit der Patrone nach dem Dübelprinzip in der Blindbohrung gewährleistet.

Um die Montage zu erleichtern, kann zum Einpressen des Gehäuses und/oder des Kunststoffrings ein hohles Fügewerkzeug mit einem Schlagbolzen verwendet werden, an dessen Ende das Gehäuse aufgenommen wird und bei dem das Gehäuse und/oder der Kunststoffring mittels des Fügewerkzeugs, vorzugsweise unter Verwendung eines Hammers, in die Blindbohrung eingepresst wird.

Auf diese Weise wird eine einfache und sichere Montage entweder unmittelbar des Gehäuses mit der Patrone in der Blindbohrung ermöglicht oder aber des Gehäuses mit der Patrone und unter zusätzlicher Verwendung des Kunststoffrings. In beiden Fällen wird durch das hohle Fügewerkzeug eine Beschädigung der empfindlichen Patrone vermieden.

Gemäß einem weiteren Merkmal der Erfindung wird der Spreizabschnitt vom Gehäuse abgetrennt oder verkürzt wird, und das Gehäuse zusammen mit der Patrone in die Blindbohrung eingepresst oder eingeklebt.

Dies erlaubt eine Befestigung an Werkzeugen, bei denen nur eine geringe Tiefe für die Blindbohrung zur Verfügung steht (wie etwa bei Stichsägen). Ggf. kann eine speziell kurze Patrone verwendet werden.

Es versteht sich, dass die vorstehend genannten und die nachstehend noch zu erläuternden Merkmale der Erfindung nicht nur in der jeweils angegebenen Kombination, sondern in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine teilweise geschnittene Seiten-Teilansicht eines erfindungsgemäßen Werkzeuges;
- Fig. 2: einen vergrößerten Querschnitt durch ein Gehäuse zur Aufnahme einer Patrone mit RFID-Chip, das entweder unmittelbar in eine Blindbohrung am Werkzeug eingesetzt werden kann oder aber unter Zuhilfenahme eines zusätzlichen Elements in Form eines Kunststoffrings;
- Fig. 3: eine perspektivische Ansicht des Gehäuses gemäß Figur 2;
- Fig. 4: einen Querschnitt durch einen Kunststoffring, der zusätzlich zusammen mit dem Gehäuse verwendet werden kann, um eine Befestigung innerhalb einer Blindbohrung des Werkzeugs zu gewährleisten;
- Fig. 5: eine Aufsicht des Kunststoffrings gemäß Figur 4;
- Fig. 6: einen Schnitt durch den Kunststoffring mit eingesetztem Gehäuse, der innerhalb der Blindbohrung des Werkzeugs unter Druck gehalten ist;
- Fig. 7: eine leicht abgewandelte Ausführung des Kunststoffrings mit dem darin gehaltenen Gehäuse;
- Fig. 8: den Kunststoffring gemäß Figur 7 mit darin aufgenommenem Gehäuse nach Montage in der Blindbohrung des Werkzeugs;
- Fig. 9: eine alternative Einbaumöglichkeit des Gehäuses in der Blindbohrung des Werkzeugs unter Verwendung eines O-Rings, wobei auf einen zusätzlichen Kunststoffring verzichtet wurde;
- Fig. 10: eine weitere Abwandlung der Ausführung gemäß Figur 9, bei der in der Blindbohrung ein Hinterschnitt vorgesehen ist, um eine formschlüssige Festlegung des Gehäuses unmittelbar in der Blindbohrung zu gewährleisten;
- Fig. 11: eine schematische Darstellung eines Fügewerkzeuges zur Montage des Gehäuses zusammen mit dem Kunststoffring in einer Blindbohrung des Werkzeugs;
- Fig. 12: das Gehäuse mit darin vergossener Patrone gemäß Fig. 2; und
- Fig. 13: das Gehäuse mit Patrone gemäß Fig. 12 nach dem Abtrennen des Spreizabschnittes zwecks Einbau in kurze Blindbohrungen.

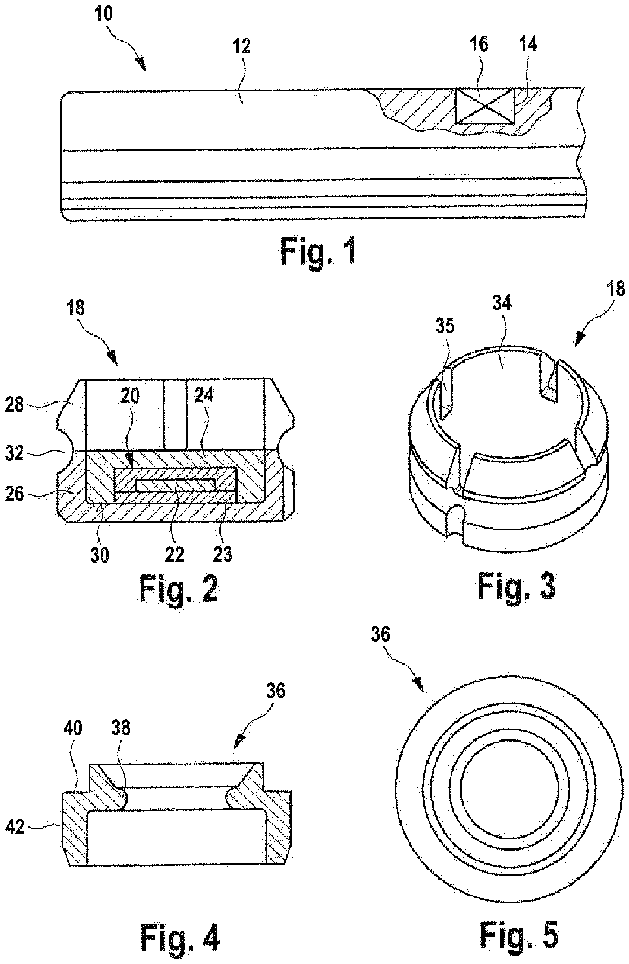

In Fig. 1 ist ein erfindungsgemäßes Werkzeug insgesamt mit der Ziffer 10 bezeichnet.

Es kann sich hierbei beispielsweise um ein Bohr- oder Fräswerkzeug handeln. Im Schaft 12 des Werkzeugs 10 ist eine Blindbohrung 14 vorgesehen, in dem ein insgesamt mit 16 bezeichneter Einsatz mit einem RFID-Chip gehalten ist.

Erfindungsgemäß bestehen verschiedene Möglichkeiten zur Befestigung eines solchen Einsatzes 16 in der Blindbohrung 14, die im Folgenden anhand der Fig. 2 bis 11 näher erläutert werden.

Fig. 2 zeigt eine vergrößerte Darstellung eines topfförmigen Gehäuses 18, in dem eine Patrone 20 mit einem RFID-Chip 22 und einer zugehörigen Antenne 23 aufgenommen ist. Der Durchmesser der Patrone 20 kann beispielsweise 5 Millimeter betragen und die Höhe z.B. 2 Millimeter.

Unter Patrone 20 wird hierbei eine Einheit verstanden, die auf dem RFID-Chip 22 zusammen mit der zugehörigen Antenne 23 und einem umschließenden Material gebildet ist, so dass sich eine kompakte Einheit ergibt.

Im vorliegenden Fall ist die Patrone 20 unmittelbar am Boden 30 des topfförmigen Gehäuses 18 aufgenommen und zusätzlich mittels einer Vergussmasse 24, etwa in Form eines Epoxidharzes, vollständig umschlossen und dauerhaft stoffschlüssig in einem Aufnahmeabschnitt 26 des Gehäuses 18 aufgenommen.

Von dem Aufnahmeabschnitt 26, in dem die Patrone 20 mit der Vergussmasse 24 gehalten ist, steht der Mantel des topfförmigen Gehäuses 18 weiter nach außen hervor. Der Bereich, der nicht mit der Vergussmasse 24 befüllt ist, ist hierbei als Spreizabschnitt 28 bezeichnet. An seinem vom Boden 30 abgewandten Ende ist der Spreizabschnitt 28 konisch zulaufend ausgebildet. Weiterhin weist der Spreizabschnitt 28 eine umlaufende, konkav geformte, Außennut 32 auf.

Wie aus Fig. 3 näher zu ersehen ist, ist der Spreizabschnitt 28 ferner durch insgesamt vier in Axialrichtung verlaufende Schlitze 35 in vier Segmente 34 unterteilt. Hierdurch wird die Elastizität des Spreizabschnittes 28 deutlich vergrößert.

Das Gehäuse 18 besteht vorzugsweise aus einem Kunststoff, wie zum Beispiel Polyethylen, und ist in der Ausführung gemäß Fig. 2 bzw. 3 durch eine spanende Bearbeitung hergestellt.

Dies erlaubt eine kostengünstige Herstellung ohne die Anfertigung von teuren Kunststoffspritzgussformen. Eine derartige Ausführung ist dann sinnvoll, wenn keine hohen Stückzahlen zu erwarten sind, welche eine Herstellung im Spritzgussverfahren sinnvoll machen würden.

In den Fig. 4 und 5 ist ein zugeordneter Kunststoffring insgesamt mit 36 bezeichnet. Der Kunststoffring 36 ist an seiner Innenseite zur Aufnahme des Gehäuses 18 mit der darin gehaltenen Patrone 20 ausgebildet. Die Außenoberfläche 42 des Kunststoffrings 36 ist zum Einpressen in die zugeordnete Blindbohrung 14 am Werkzeugschaft 12 ausgebildet. Auch der Kunststoffring kann beispielsweise aus PVC bestehen.

Die Bemaßung ist nun so getroffen, dass der Kunststoffring 36 gegenüber der Blindbohrung 14 ein solches Übermaß aufweist, dass sich in sämtlichen Betriebsbereichen eine dauerhaft elastische Verformung des Kunststoffrings ergibt.

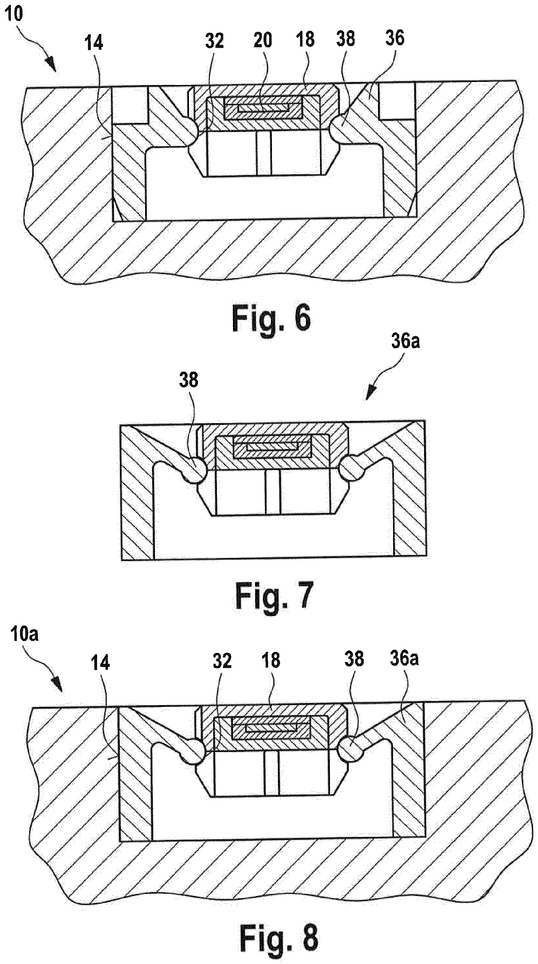

Fig. 6 zeigt den Kunststoffring 36 zusammen mit dem darin aufgenommenen Gehäuse 14 mit der Patrone 20 nach Montage in der Blindbohrung 14 des Werkzeugs 10.

Hierbei ist das Gehäuse 18 mit seiner umlaufenden Außennut 32 formschlüssig an einem zugeordneten Innenwulst 38 des Kunststoffrings 36 gehalten.

Auf diese Weise ist eine sichere und dauerhafte Aufnahme der Patrone 20 am Werkzeug 10 gewährleistet.

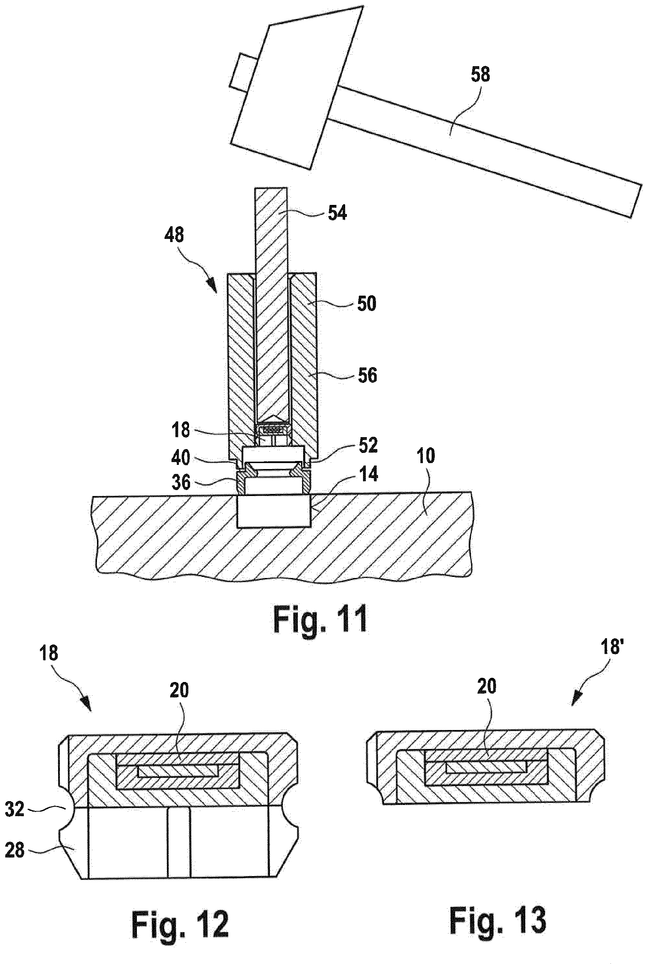

Um eine Beschädigung der empfindlichen Patrone 20 beim Einbau in die Blindbohrung 14 zu vermeiden, kann ein spezielles Fügewerkzeug verwendet werden, das in Fig. 11 dargestellt ist und insgesamt mit 48 bezeichnet ist.

Es handelt sich hierbei um ein zweiteiliges Fügewerkzeug 48 mit einem Rohr 50, dessen dem Kunststoffring 36 zugewandter Rand 52 zur Anlage an dem Kunststoffring 36 ausgebildet ist. Hierbei liegt das Rohr 50 mit seinem Rand 52 unmittelbar auf einer Randausnehmung 40 (vgl. Fig. 4) am zugewandten Rand des Kunststoffrings 36 auf.

Darüber ist das Gehäuse 18 mit der darin aufgenommenen Patrone gehalten. In das Rohr 50 ist ferner ein Schlagbolzen 54 eingesetzt, mit einem hohlen Ende 56, das derart auf das Gehäuse 18 abgestimmt ist, dass eine Berührung des Gehäuses 18 nur im Randbereich erfolgt, so dass die Patrone 20 mit dem RFID-Chip 22 bzw. der zugeordneten Antenne 23 beim Einschlagen mittels des Schlagbolzens 54 möglichst wenig beeinträchtigt wird.

Das Fügewerkzeug 48 wird zusammen mit dem Kunststoffring 36 und dem Gehäuse 18 unmittelbar auf die zugeordnete Blindbohrung 14 aufgesetzt und kann durch Schlagen oder Drücken z.B. mittels eines Hammers 58 auf den Schlagbolzen 54 in die Blindbohrung 14 eingetrieben werden, so dass das Gehäuse 18 mit dem Kunststoffring 36 nach dem Dübelprinzip in der Blindbohrung 14 mit einer Presspassung gehalten ist.

Eine Variante des Kunststoffrings ist in Fig. 7 dargestellt und insgesamt mit der Ziffer 36a bezeichnet. Hierbei, wie auch bei den nachfolgenden Figuren werden entsprechende Teile mit entsprechenden Bezugsziffern bezeichnet.

Auch hierbei ist ein Innenwulst 38 vorgesehen, der zur Aufnahme des Gehäuses 18 an dessen Außennut 32 ausgebildet ist. Die Funktion des Kunststoffrings 36a entspricht vollständig der Funktion des Kunststoffrings 36. Jedoch ist hierbei aufgrund der Form noch eine größere Elastizität des Kunststoffrings 36a im Vergleich zum Kunststoffring 36 zu erwarten.

Allerdings kann diese Form nicht mehr wie beim Kunststoffring 36 durch spanende Bearbeitung hergestellt werden. Vielmehr muss ein solcher Kunststoffring 36a als Kunststoffspritzgussteil hergestellt werden, was entsprechend hohe Formkosten bedeutet, also nur für eine Großserienfertigung sinnvoll ist.

Fig. 8 zeigt den Kunststoffring 36a zusammen mit dem darin aufgenommenen Gehäuse 18 mit Patrone 20 nach Montage in der Blindbohrung 14 eines Werkzeugs 10.

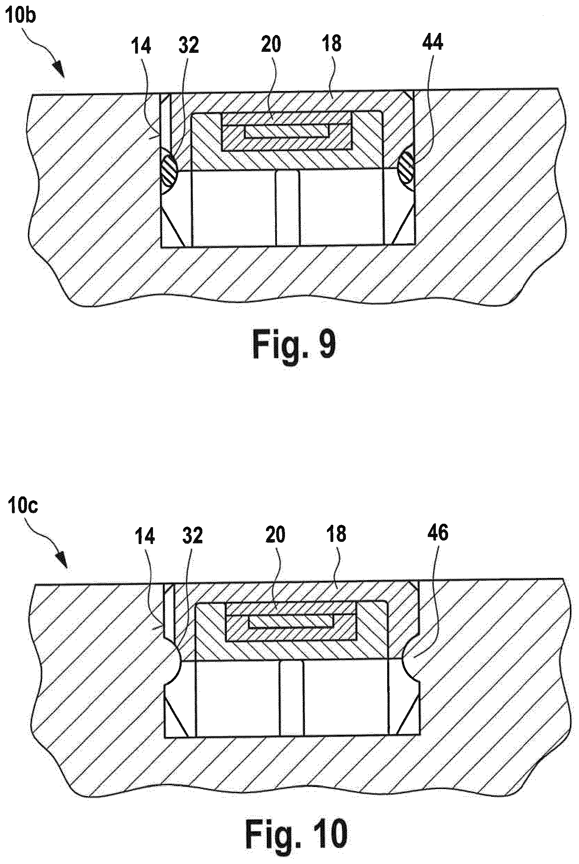

Fig. 9 zeigt eine weitere Abwandlung des Werkzeugs, das insgesamt mit 10b bezeichnet ist. Hierbei ist das Gehäuse 18 mit der Patrone 20 unmittelbar in der Blindbohrung 14 befestigt. Hierzu ist ein O-Ring 44 in die Außennut 32 des Gehäuses 18 eingesetzt und das Gehäuse 18 zusammen mit dem O-Ring 44 in die Blindbohrung 14 eingepresst. Auch für eine solche Montage wird vorzugsweise ein entsprechend angepasstes Fügewerkzeug ähnlich dem Fügewerkzeug gemäß Fig. 11 verwendet.

Eine weitere Abwandlung eines erfindungsgemäßen Werkzeugs ist in Fig. 10 dargestellt und insgesamt mit 10c bezeichnet.

Hierbei ist die Blindbohrung 30 mit einer Hinterschneidung 46 ausgebildet, so dass das Gehäuse 18 mit seiner Außennut 32 am Hinterschnitt 46 nach dem Einbau formschlüssig gehalten ist.

Auch hierzu wird vorzugsweise ein entsprechendes Fügewerkzeug verwendet.

Bei der Montage des Gehäuses 18 entweder unmittelbar in der Blindbohrung 14 gemäß den Fig. 9 und 10 oder mittelbar unter Verwendung des Kunststoffrings 36 bzw. 36a gemäß der Fig. 6, 8 kann zusätzlich ein Klebstoff verwendet werden, um eine zusätzliche Sicherung und/oder Abdichtung zu gewährleisten.

Fig. 12 zeigt ein Gehäuse 18 gemäß Fig. 2 mit eingegossener Patrone 20. Die Außennut 32 des Gehäuses 18 kann als Sollbruchstelle genutzt werden, wenn der Spreizabschnitt 28 abgetrennt werden soll. Die Einheit 18' nach dem Abtrennen des Spreizabschnitts 28 zeigt Fig. 13. Eine solchermaßen verkürzte Bauweise eignet sich besonders zum Einbau in flache Werkzeuge (z.B. Stichsägeblätter), bei denen nur eine Blindbohrung mit geringer Tiefe zur Verfügung steht.

## Patentansprüche

1. Werkzeug, mit einer Patrone (20), in der ein RFID-Chip (22) gekapselt aufgenommen ist,
wobei die Patrone (20) in einer Blindbohrung (14) des Werkzeugs (12) gehalten ist,
wobei die Patrone (20) mittels eines die Patrone (20) umschließenden Gehäuses (18) in der Blindbohrung (14) gehalten ist,
**dadurch gekennzeichnet**,
J dass das Werkzeug zur spanenden Bearbeitung von metallischen Werkstücken ausgebildet ist,
dass das Gehäuse (18) topfförmig mit einem Aufnahmeabschnitt (26) zur Aufnahme der aus Kunststoff bestehenden Patrone (20) im Bereich eines Bodens (30) des Gehäuses (18) ausgebildet ist, und
dass sich an den Aufnahmeabschnitt (26) ein Spreizabschnitt (28) anschließt, der eine elastische Verformung des Gehäuses (18) zur unmittelbaren Fixierung des Gehäuses (18) mittels Einpressen in die Blindbohrung (14) oder mittels eines zusätzlichen Elements erlaubt.

2. Werkzeug nach Anspruch 1, **dadurch gekennzeichnet, dass** der Spreizabschnitt (28) in Umfangsrichtung in eine Mehrzahl von Segmenten (34) unterteilt ist.

3. Werkzeug nach einem der vorhergehenden Ansprüche, **dadurch gekennzeichnet, dass** das Gehäuse (18) eine umlaufende Außennut (32) aufweist.

4. Werkzeug nach einem der Ansprüche 1 bis 3, **dadurch gekennzeichnet, dass** der Spreizabschnitt (28) an seinem äußeren Ende konisch zulaufend ausgebildet ist.

5. Werkzeug nach einem der Ansprüche 1 bis 4, **dadurch gekennzeichnet, dass** das Gehäuse (18) mit der Patrone (20) als Kunststoffspritzgussteil vergossen ist.

6. Werkzeug nach einem der Ansprüche 1 bis 4, **dadurch gekennzeichnet, dass** die Patrone (20) mit dem Gehäuse (18) mittels einer Vergussmasse (24) stoffschlüssig verbunden ist.

7. Werkzeug nach einem der vorhergehenden Ansprüche, **dadurch gekennzeichnet, dass** das Gehäuse (18) zusammen mit einem O-Ring (44) in der Blindbohrung (14) unter Vorspannung gehalten ist.

8. Werkzeug nach einem der Ansprüche 1 bis 7, **dadurch gekennzeichnet, dass** das Gehäuse (18) in die Blindbohrung (14) des Werkzeugs (10) eingepresst ist.

9. Werkzeug nach Anspruch 8, **dadurch gekennzeichnet, dass** das Gehäuse (18) an einem Hinterschnitt (46) der Blindbohrung (14) gehalten ist.

10. Werkzeug nach einem der vorhergehenden Ansprüche, **dadurch gekennzeichnet, dass** das Gehäuse (18) in der Blindbohrung (14) des Werkzeugs (10) durch einen Klebstoff fixiert ist.

11. Werkzeug nach einem der vorhergehenden Ansprüche, **dadurch gekennzeichnet, dass** das Gehäuse (18) in einem Kunststoffring (36, 36a) gehalten ist, der in die Blindbohrung (14) des Werkzeugs (10) eingepresst ist.

12. Werkzeug nach Anspruch 11, **dadurch gekennzeichnet, dass** der Kunststoffring (36, 36a) einen umlaufenden Innenwulst (38) aufweist, in dem das Gehäuse (18) mit einer umlaufenden Außennut (32) formschlüssig gehalten ist.

13. Werkzeug nach Anspruch 11 oder 12, **dadurch gekennzeichnet, dass** der Kunststoffring (36, 36a) gegenüber der Blindbohrung (14) ein solches Übermaß aufweist, dass der Kunststoffring (36, 36a) nach dem Einpressen in die Blindbohrung (14) im dauerelastischen Bereich verformt ist.

## Claims

1. Tool comprising a cartridge (20) wherein an RFID chip (22) is received encapsulated,
wherein the cartridge (20) is held within a blind bore (14) of the tool (12), wherein the cartridge (20) is held within the blind bore (14) by means of a housing (18) surrounding the cartridge (20), **characterized in that**
the tool is configured for working metallic workpieces by cutting, that the housing (18) is configured pot-shaped having a receiving section (26) for receiving the cartridge (20) consisting of plastic within a region of a bottom (30) within the housing (18), and **in that** a strutting section (28) follows the receiving section (26), the strutting section allowing an elastic deformation of the housing (18) for a direct fixation of the housing (18) by means of pressing into the blind bore (14) or by means of an additional element.

2. Tool according to claim 1, **characterized in that** the strutting section (28) in peripheral region is divided into a plurality of segments (34).

3. Tool according to any of the preceding claims, **characterized in that** the housing (18) comprising a peripheral outer groove (32).

4. Tool according to any of claims 1 to 3, **characterized in that** the strutting section (28) at its outer end is configured conically tapering.

5. Tool according to any of claims 1 to 4, **characterized in that** the housing (18) is molded with the cartridge (20) as a plastic molded part.

6. Tool according to any of claims 1 to 4, **characterized in that** the cartridge (20) is connected with a molding material (24) materially.

7. Tool according to any of the preceding claims, **characterized in that** the housing (18) is held within the blind bore (14) together with an O-ring (44) under pre-tension.

8. Tool according to any of claims 1 to 7, **characterized in that** the housing (18) is pressed into the blind bore (14) of the tool (10).

9. Tool according to claim 8, **characterized in that** the housing (18) is held within the blind bore (14) by means of an undercut (46).

10. Tool according to any of the preceding claims, **characterized in that** the housing (18) is secured within the blind bore (14) of the tool (10) by means of an adhesive.

11. Tool according to any of the preceding claims, **characterized in that** the housing (18) is held within a plastic ring (36, 36a) which is pressed into the blind bore (14) of the tool (10).

12. Tool according to claim 11, **characterized in that** the plastic ring (36, 36a) comprises a peripheral inner ridge (38) within which the housing (18) is held positively by means of a peripheral outer groove (32).

13. Tool according to claim 11 or 12, **characterized in that** the plastic ring (36, 36a) with respect to the blind bore (14) has such a positive dimension that the plastic ring (36, 36a) after pressing into the blind bore (14) is deformed within a permanent elastic range.

## Revendications

1. Outil, comprenant une cartouche (20), dans laquelle est reçue sous forme encapsulée une puce RFID (22),
la cartouche (20) étant maintenue dans un trou borgne (14) de l'outil (12),
la cartouche (20) étant maintenue dans le trou borgne (14) au moyen d'un boîtier (18) entourant la cartouche (20),
**caractérisé en ce que**
l'outil est configuré pour l'usinage par enlèvement de copeaux de pièces métalliques,
le boîtier (18) est configuré en forme de pot avec une section de réception (26) pour recevoir la cartouche (20) constituée de matière plastique dans la zone d'un fond (30) du boîtier (18), et
la section de réception (26) est suivie d'une section d'expansion (28) qui permet une déformation élastique du boîtier (18) pour la fixation directe du boîtier (18) par enfoncement dans le trou borgne (14) ou au moyen d'un élément supplémentaire.

2. Outil selon la revendication 1, **caractérisé en ce que** la section d'expansion (28) est divisée en une pluralité de segments (34) dans la direction circonférentielle.

3. Outil selon l'une quelconque des revendications précédentes, **caractérisé en ce que** le boîtier (18) présente une rainure extérieure périphérique (32).

4. Outil selon l'une quelconque des revendications 1 à 3, **caractérisé en ce que** la section d'expansion (28) est configurée pour se terminer sous forme conique à son extrémité extérieure.

5. Outil selon l'une quelconque des revendications 1 à 4, **caractérisé en ce que** le boîtier (18) est moulé avec la cartouche (20) sous forme de pièce moulée par injection en matière plastique.

6. Outil selon l'une quelconque des revendications 1 à 4, **caractérisé en ce que** la cartouche (20) est reliée au boîtier (18) par liaison de matière au moyen d'une masse de scellement (24).

7. Outil selon l'une quelconque des revendications précédentes, **caractérisé en ce que** le boîtier (18) est maintenu sous précontrainte conjointement avec un joint torique (44) dans le trou borgne (14).

8. Outil selon l'une quelconque des revendications 1 à 7, **caractérisé en ce que** le boîtier (18) est enfoncé dans le trou borgne (14) de l'outil (10).

9. Outil selon la revendication 8, **caractérisé en ce que** le boîtier (18) est maintenu sur une contre-dépouille (46) du trou borgne (14).

10. Outil selon l'une quelconque des revendications précédentes, **caractérisé en ce que** le boîtier (18) est fixé dans le trou borgne (14) de l'outil (10) par un adhésif.

11. Outil selon l'une quelconque des revendications précédentes, **caractérisé en ce que** le boîtier (18) est maintenu dans une bague en matière plastique (36, 36a) qui est enfoncée dans le trou borgne (14) de l'outil (10).

12. Outil selon la revendication 11, **caractérisé en ce que** la bague en matière plastique (36, 36a) présente un bourrelet intérieur périphérique (38) dans lequel le boîtier (18) est maintenu par complémentarité de forme avec une rainure extérieure périphérique (32).

13. Outil selon la revendication 11 ou 12, **caractérisé en ce que** la bague en matière plastique (36, 36a) présente une surdimension par rapport au trou borgne (14) telle que la bague en matière plastique (36, 36a) est déformée dans la zone d'élasticité permanente après avoir été enfoncée dans le trou borgne (14).
